(19) Europäisches Patentamt
European Patent Office
Office européen des brevets

(11) **EP 4 145 350 A1**

(12) **EUROPEAN PATENT APPLICATION**

(43) Date of publication:
**08.03.2023 Bulletin 2023/10**

(51) International Patent Classification (IPC):
**G06N 3/04** *(2006.01)*     **G06N 3/08** *(2006.01)*

(21) Application number: **21194450.9**

(22) Date of filing: **02.09.2021**

(52) Cooperative Patent Classification (CPC):
**G06N 3/08; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Welling, Max**
  **1098XH Amsterdam (NL)**
• **Hesselink, Rob**
  **1098XH Amsterdam (NL)**
• **Brandstetter, Johannes**
  **4040 Linz (AT)**
• **Bekkers, Erik J**
  **5213SP s-Hertogenbosch (NL)**
• **Herman, Michael**
  **71065 Sindelfingen (DE)**
• **van der Pol, Elise**
  **1098XH Amsterdam (NL)**

(54) **NEURAL NETWORK FOR ANALYZING GRAPHS**

(57)     Neural network (60) configured for determining an output signal (y) characterizing an analysis of a graph (x), wherein nodes (K) of the graph (x) comprise covariant information and wherein the neural network (60) comprises a graph convolutional layer ($G_1$, $G_2$, $G_n$) that receives a layer input based on the graph (x) and provides a layer output, wherein the analysis depends on the layer output and wherein the layer output characterizes a first feature vector of a first node (K) of the graph (x) and wherein determining the layer output comprises the steps of:
• Determine at least one first message from a neighboring node (N) to the first node (K) of the graph (x), wherein the first message is determined by a first neural network, wherein the first neural network characterizes an equivariant mapping with respect to a covariant information of the first node (K) and a covariant information of the neighboring node (N);
• Determining a second message by aggregating the determined first messages for the first node (K);
• Determining the first feature vector by a second neural network, wherein for determining the first feature vector the second neural network is supplied the second message as at least part of an input of the second neural network and wherein the second neural network characterizes an equivariant mapping with respect to the covariant information of the first node and the covariant information of the neighboring node.

Fig. 1

EP 4 145 350 A1

**Description**

Technical field

The invention concerns a neural network for analyzing graphs, a method for analyzing graphs, a training method, a training system, a computer program, and a machine-readable storage medium.

Prior art

Satorras et al. "E(n) equivariant graph neural networks", May 9th, 2021, https://export.arxiv.org/abs/2102.09844v2 discloses a method for analyzing graphs by means of an equivariant graph neural network.

Background of the invention

Analyzing graphs is becoming an increasingly important task in various technical fields. Graphs may, for example, model characteristics of atoms, molecules, fluids, or other physical substances as well as behavior of agents in an environment, e.g., pedestrians or vehicles in the vicinity of an autonomous vehicle. Being able to accurately analyze these graphs, e.g., classify or perform regression on nodes of the graph or the entire graph, is hence desirable for various downstream applications.

Graphs may, in particular, comprise covariant information about nodes comprised in the graph. For example, the nodes in a graph may characterize pedestrians or vehicles, wherein nodes may characterize properties of the pedestrians and vehicles, while the edges may characterize relative position information, e.g., distances and/or velocities and/or accelerations between the objects characterized by the nodes. Similarly, a graph may characterize a molecule with the covariant information characterizing positions of atoms comprised in the molecule.

The inventors found that it is beneficial to design an analysis of a graph comprising covariant information such that the analysis is equivariant to a certain group of transformations with respect to the covariant information. For example, using the example of the graph characterizing pedestrians or vehicles, it should be irrelevant how a coordinate system for the position and/or velocities and/or accelerations of the objects is rotated when classifying the graph or performing a regression analysis based on the graph.

Disclosure of the invention

Considering this background, in a first aspect the invention concerns a neural network configured for determining an output signal characterizing an analysis of a graph, wherein nodes and/or edges of the graph comprise covariant information and wherein the neural network comprises a graph convolutional layer that receives a layer input based on the graph and provides a layer output, wherein the analysis depends on the layer output and wherein the graph convolutional layer output characterizes a first feature vector of a first node of the graph and wherein determining the layer output comprises the steps of:

- Determine at least one first message from a neighboring node to the first node of the graph, wherein the first message is determined by a first neural network, wherein the first neural network characterizes an equivariant mapping with respect to a covariant information of the first node and a covariant information of the neighboring node;
- Determining a second message by aggregating the determined first messages for the first node;
- Determining the first feature vector by a second neural network, wherein for determining the first feature vector the second neural network is supplied the second message as at least part of an input of the second neural network and wherein the second neural network characterizes an equivariant mapping with respect to the covariant information of the first node and the covariant information of the neighboring node.

A graph may be understood as a tuple of a plurality of nodes and at least one edge, wherein each edge connects two nodes from the plurality of nodes. Nodes and edges of a graph may be assigned specific information that may especially be characterized by a value, preferably a plurality of values in the form of a vector. These vectors may also be referred to as feature vectors. Feature vectors may assign tangible meta-information to nodes. For example, using the example of a graph characterizing objects in the vicinity of an autonomous vehicle, a feature vector may characterize a convex hull of an object, e.g., a bounding box. Feature vectors may, however, also characterize information obtained by applying a neural network to the graph.

The analysis may be understood as a classification of the entire graph and/or a classification of at least one node of the graph. Alternatively or additionally, the analysis may also characterize a regression result, i.e., a result of performing a regressions analysis, for the entire graph and/or for at least one node of the graph.

A node of the graph may be understood as neighboring node of the first node if there exists an edge connecting the node and the first node. Alternatively, the node may also only be considered a neighboring node of the first node if a distance of a covariant information of the node and a covariant information of the first node is less or equal to a predefined threshold. For example, nodes of the graph may be assigned positions in $\mathbb{R}^3$ and the node is considered a neighboring node of the first node if the node is connected to the first node and a Euclidean distance of the positions of the respective nodes is less than or equal to the predefined threshold. In general, the first node may have multiple neighboring nodes. Neighboring nodes of the first node will also be referred to as the neighbors of the first node in the following.

The covariant information of a node may characterize a position and/or a velocity and/or an acceleration of an object or physical item characterized by node or a relative position and/or a relative velocity and/or a relative acceleration between two objects or physical items characterized by nodes connected by an edge, i.e., the covariant information may be assigned to an edge. The covariant information may also characterize any other physical relationship between objects or physical items characterized by the respective nodes. Covariant information may especially be given in the form of a vector.

The neural network can be considered as a message passing neural network from the field of graph neural networks. Message passing neural networks may, in particular, be used to classify a graph or perform a regression analysis based on a graph. The graph convolutional layer comprised in the neural network may be configured to process the graph directly, i.e., the graph convolutional layer may be an input layer of the neural network. Alternatively, the graph convolutional layer may also accept input from another graph convolutional layer of the neural network. Similar to neural networks for processing images, the neural network may use the graph as input to a plurality of graph convolutional layers. The plurality of graph convolutional layers may be concatenated in a sense that the graph convolutional layers provide information to other graph convolutional layers of the neural network. For example, they may be stacked sequentially. Each graph convolutional layer may take as input a graph comprising nodes, wherein each node may be assigned a feature vector. The output of a graph convolutional layer may again be understood as graph, wherein feature vectors of the nodes are enriched with additional information in the graph convolutional layer. Using the graph as input to the plurality of graph convolutional layers, the output of each graph convolutional layer of the plurality of graph convolutional layers depends on the graph.

Message passing neural networks may analyze a graph by means of a message passing algorithm. The general concept of such an algorithm is to determine information characterizing influences of neighboring nodes on a first node of the graph. Using common nomenclature of message passing neural networks, this information is referred to as a message. In the neural network disclosed in this invention, a message is determined based on processing a feature vector of the first node and a feature vector of the neighboring node by means of the first neural network. Advantageously, the first neural network is configured to be equivariant with respect to covariant information of the nodes of the graph for a certain group of transformations. For example, if the covariant information characterizes vectors in $\mathbb{R}^3$, the first neural network may be understood to be E(3) equivariant. In other words, the first neural network may be understood as being equivariant with respect to rotations, reflections, translations, and permutations of covariant information of the nodes of the graph.

The first neural network may accept an input characterized by a vector obtained by stacking the feature vector of the neighboring node and the first node, determining an output for the supplied input, and providing the output as the first message. This process of determining the first message may also be referred to as determining the first message form the neighboring node to the first node. The input for the first neural network may also be enriched with additional information, e.g., a distance between covariant information of the first node and the neighboring node and/or the covariant information itself. As the first message is the output of the first neural network, the first message may especially be given in the form of a vector, which was output by the first neural network for its input.

The first neural network is configured to perform an equivariant mapping of its input to the message, wherein the first neural network is equivariant with respect to the covariant information of the neighboring node.

The process of determining the first message can preferably be repeated for all neighboring nodes of the first node. In other words, a plurality of first messages may be determined for the first node, each first message characterizing a message form a neighboring node to the first node.

The first messages determined this way may then be aggregated into a second message. For aggregation, the messages may preferably be summed. Alternatively, it is also possible to aggregate the messages by averaging or a weighted sum. The second message may be understood as characterizing the messages sent from all neighboring nodes to the first node thus characterizing an information provided from the neighbors of the first node to the first node. If the first node only has one neighbor, aggregation may be performed by providing the first message as second message. If the first node does not have any neighbor, the second message may simply be set to a predefined message, e.g., the null vector.

The second message may then be processed as at least part of an input of the second neural network. Preferably, the second neural network is also provided the feature vector of the first node as part of the input of the second neural network. Based on its input, the second neural network then determines the first feature vector.

Using nomenclature of message passing neural networks, determining the first vector from the second neural network can be understood as an update step. In other words, the first feature vector determined by the graph convolutional layer can be understood as enriching the feature vector of the first node with information about its neighbors, thereby updating the feature vector to the first feature vector, which carries more information.

Preferably, the feature vector of each node in the graph is updated to a first feature vector according to the steps performed by the layer.

As both the first neural network and the second neural network perform an equivariant mapping, updating the feature vector of the first node to the first feature vector may also be understood as an equivariant mapping. In other words, the graph convolutional layer performs an equivariant mapping.

The inventors found that performing an equivariant mapping from the feature vector to first feature vector improves the accuracy of the analysis.

Preferably, first neural network and the second neural network are designed to perform equivariant mappings using the concept of steerability. In particular, the first neural network and/or the second neural network preferably comprises a steerable layer respectively, wherein the steerable layer characterizes a mapping between steerable vector spaces and wherein steering is based on the covariant information of the first node and the covariant information of the neighboring node. Preferably, the first neural network and the second neural network are each made up of steerable layers.

A steerable layer can be understood as a function mapping from a steerable vector to another steerable vector. A steerable vector is characterized by the fact that for a certain transformation group, the vector transforms via matrix-vector multiplication. For example, a Euclidean vector in $\mathbb{R}^3$ is steerable for rotations $g = R \, E \, 50(3)$ by multiplying the vector with a rotation matrix, thus $D(g) = R$. Steerable vectors are, however, not restricted to $\mathbb{R}^3$.

A fully connected layer as used in, e.g., a multilayer perceptron may not be able to map between spaces of steerable vectors (also referred to as steerable vector spaces) due to non-linear activation functions. Thus, the inventors devised a preferred way to guarantee that a steerable layer is indeed a mapping between steerable vector spaces. Preferably, the mapping characterized by the steerable layer is based on a Clebsch-Gordan product of an input of the steerable layer and a determined steerable vector, wherein the steerable vector characterizes covariant information the neighboring node.

The Clebsch-Gordan (CG) tensor product $\otimes cg$: $V_{l_1} \times V_{l_2} \to V_l$ is a bilinear operator that combines two O(3) steerable input vectors of types $l_1$ and $l_2$ and returns another steerable vector of type $l$. A vector of type $l$ resides in $\mathbb{R}^{2l+1}$. Let $v^{(l)} \in V_l = \mathbb{R}^{2l+1}$ denote a steerable vector of type $l$ let and $v_m^{(l)}$ denote its components with m = -$l$, -$l$ + 1, ..., $l$. The CG tensor product is given by

$$\left( v^{(l_1)} \otimes_{cg} v^{(l_2)} \right)_m^{(l)} = \sum_{m_1=-l_1}^{l_1} \sum_{m_2=-l_2}^{l_2} C_{(l_1,m_1)(l_2,m_2)}^{(l,m)} v_{m_1}^{(l_1)} v_{m_2}^{(l_2)},$$

in which $C_{(l_1,m_1)(l_2,m_2)}^{(l,m)}$ are the Clebsch-Gordan coefficients that ensure that the resulting vector is steerable. The CG tensor product is a sparse tensor product, as generally many of the Clebsch-Gordan coefficients are zero. Most notably, a coefficient $C_{(l_1,m_1)(l_2,m_2)}^{(l,m)} = 0$ whenever $l < |l_1 - l_2|$ or $l > l_1 + l_2$. Well known examples of the CG product are the scalar product ($l_1 = 0$; $l_2 = 1$; $l = 1$), which takes as input a scalar and a type-1 vector to generate a type-1 vector, the dot product ($l_1 = 1$; $l_2 = 1$; $l = 0$) and cross product ($l_1 = 1$; $l_2 = 1$; $l = 1$).

A steerable layer may perform its mapping according to the formula

$$\left( h^{(l_1)} \otimes_{cg} a^{(l_2)} \right)_m^{(l)} = \sum_{m_1=-l_1}^{l_1} \sum_{m_2=-l_2}^{l_2} w C_{(l_1,m_1)(l_2,m_2)}^{(l,m)} h_{m_1}^{(l_1)} a_{m_2}^{(l_2)},$$

wherein $h^{(l_1)}$ is an input to the steerable layer and $a^{(l_2)}$ characterizes the covariant information and w characterizes a learnable parameter of the steerable layer. Preferably, the layer comprises a learnable parameter for each Clebsch-Gordan coefficient. However, it is also possible to use the same learnable parameter for a plurality of Clebsch-Gordan coefficients.

While in general the CG tensor product between two steerable vectors of type $l_1$ and $l_2$ can contain steerable vectors up to degree $l = l_1 + l_2$, it is possible to "band-limit" the output vector by only considering the steerable vectors up to a predefined degree.

Using the formulation of the Clebsch-Gordan product, the output size of a steerable layer can be defined through the value $l$.

Advantageously, the Clebsch-Gordan product guarantees that the result is steerable if its inputs are steerable. In other words, the Clebsch-Gordan product enables the steerable layer to directly map between steerable vector spaces even when faced with non-linear activation functions.

Advantageously, the inventors found that basing the steerable layer on a Clebsch-Gordan product allows for reducing the number of neighbors of the first node based on, e.g., a distance of the covariant information of the neighbor and/or the first node. In terms of message passing neural networks, this may also be referred to as decreasing a cutoff radius for the nodes. Reducing the cutoff radius leads to having to determine less first messages for a given first node which results in a speed up of determining the analysis by the neural network.

By stacking steerable layers similar to how stacking of layers is done in a multilayer perceptron , a neural network is constructed that performs an equivariant mapping of its input, wherein the mapping is equivariant with respect to the covariant information induced through the vector $a^{(l_2)}$ in each layer. Preferably, the first neural network and the second neural network are made up of steerable layers as described above.

In order for the first neural network to perform an equivariant mapping, the vector $a^{(l_2)}$ of the steerable layer or the steerable layers comprised in the first neural network can be designed based on the covariant information of the neighboring node. Preferably, for a steerable layer comprised in the first neural network the steerable vector $a^{(l_2)}$ is determined according to a projection of the covariant information of the neighboring node onto a basis of spherical harmonics. A basis of spherical harmonics can be understood as basis on a sphere. The inventors found that this projection onto spherical harmonics can be understood as a spherical Fourier transform. The number of basis functions the covariant information is mapped to can be band-limited, also. In other words, $l_2$ in the formulations above is a hyperparameter of the steerable layer.

Similar to the first neural network, the vector $a^{(l_2)}$ for steerable layers of the second neural network may be designed based on the covariant information of the neighboring nodes. Preferably, for a steerable layer comprised in the second neural network the steerable vector is determined according to a mean of projections of covariant information of neighboring nodes onto a basis of spherical harmonics. In other words, the respective covariant information of the neighbors of the first node may all be projected onto a basis of spherical harmonics and the embeddings resulting from this projection may then be combined by determining the mean of the embeddings. This mean embedding may then be used as steerable vector $a^{(l_2)}$ for the steerable layers of the second neural network.

Irrespective whether a steerable layer is comprised in the first or the second neural network, it may preferably comprise an activation function, wherein the activation function characterizes a pointwise or gated non-linearity.

By introducing a non-linearity into the steerable layer, it is able to perform non-linear mappings which advantageously improves the performance of the neural network. Advantageously, the inventors found that the gated non-linearity allows for a non-linear mapping in the steerable layer while maintaining the equivariance requirement.

The graph may characterize an atomic structure, a molecular structure, a point cloud obtained from sensing an environment by means of a sensor, a position and/or a movement of traffic participants, a position and/or a movement of molecules in a substance, a particle system, a fluid, a rigid body model of a physical object, or a model of a finite element method. The output signal may characterize a classification or a regression result for the graph or the output signal may characterize a classification or regression result for at least one node of the graph.

The neural network may comprise a plurality of graph convolutional layers, wherein the graph convolutional layers are concatenated to determine feature vectors of the nodes of the graph enriched with information stemming from neighbors of the respective nodes. After forwarding the graph through the plurality of graph convolutional layers, the output is hence a plurality of feature vectors, preferably one feature for each node. The feature vectors obtained this way may then each be classified individually or used individually as input of a regression analysis. In other words, each node may be analyzed individually and the result provided in the output signal.

Alternatively or additionally, it is also possible to determine a classification of the graph based on the feature representations obtained for the nodes. For this, the determined feature representations may be aggregated into a single feature vector characterizing the graph. Using nomenclature of message passing neural networks, a readout function may be applied to the feature vectors in order to determine the single feature vector characterizing the graph. The single feature vector may then, e.g., be used as input of a standard feed forward neural network in order to determine a classification or a result of a regression analysis.

For example, the nodes of the graph may characterize atoms and the neural network may determine an output signal characterizing a relaxed energy (see, e.g., Open Catalyst Challenge). The nodes may also characterize quantized parts of a fluid and the output signal may characterize a future movement of the fluid. The nodes may also characterize traffic participants and the output signal may characterize where the traffic participants are be moving (i.e., movement for each participant) or if a collision of traffic participants is probable or imminent. The nodes may also characterize parts of a rigid body model of a physical object, e.g., a vehicle or parts of a vehicle, and the output signal may classify a property of the physical object.

In another aspect, the invention concerns a computer-implemented method for determining an output signal characterizing an analysis of a graph, wherein nodes of the graph comprise covariant information and the output signal is determined by the neural network according to an embodiment of the first aspect.

In another aspect, the invention concerns a computer-implemented method for training the neural network. The neural network may preferably be trained using a gradient descent algorithm in a supervised learning paradigm. As all operations of the neural network are at least point-wise differentiable, standard approaches for gradient descent training of neural networks may be used here, e.g., automatic differentiation. Common training strategies for regularizing the training, e.g., weight decay, data augmentation, learning rate adaption during training or early stopping, are also applicable when training the neural network.

Embodiments of the invention will be discussed with reference to the following figures in more detail. The figures show:

Figure 1    a neural network for analyzing a graph;

Figure 2    a control system comprising a classifier controlling an actuator in its environment;

Figure 3    the control system controlling an at least partially autonomous robot;

Figure 4    the control system controlling an imaging system;

Figure 5    a training system for training the neural network.

Description of the embodiments

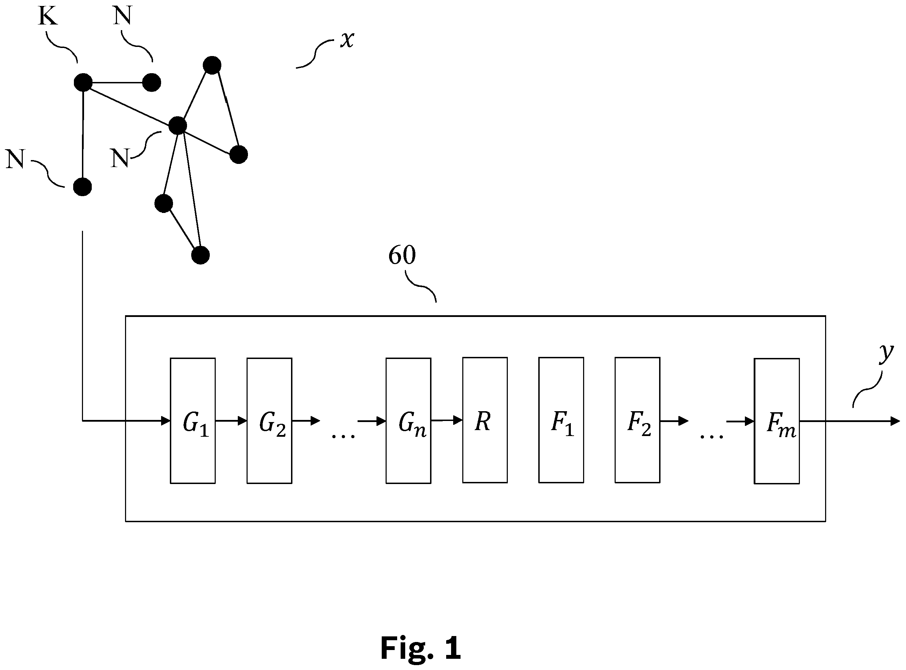

Figure 1 shows a neural network (60) for analyzing a graph ($x$). The neural network (60) takes the graph ($x$) as input and determines an output signal ($y$) characterizing a classification and/or a result of a regression analysis of the graph ($x$). The nodes of the graph may characterize a position in 3-dimensional space. Each node is further assigned a feature vector characterizing meta-information about an entity characterized by the node.

The graph ($x$) is forwarded through a graph convolutional layer ($G_1$, $G_2$, $G_n$) of the neural network (60). Preferably, the graph ($x$) is forwarded through a plurality of graph convolutional layers ($G_1$, $G_2$, $G_n$). Each graph convolutional layer ($G_1$, $G_2$, $G_n$) performs an equivariant mapping of a feature vector of a node (K) of the graph to a new feature vector of the node (K), wherein the new feature vector is enriched by incorporating information from neighboring nodes (N) of the node (K). Preferably, a new feature vector is determined for each node (K) of the graph ($x$).

The new feature vector is preferably determined by means of a message passing algorithm. In each graph convolutional layer, a first neural network is provided the feature vector of a first node and the feature vector of a neighboring node of the first node in an input of the graph convolutional layer. The input may further comprise a relative position of the neighboring node with respect to the first node. The relative position may be obtained by subtracting the position of the first node from the position of the neighboring node. Additionally, the position of the neighboring node may be embedded into a space of spherical harmonics, wherein the embedding may also be supplied to the first neural network as part of the input.

The first neural network performs an equivariant mapping of the input to a first message. In order to determine an equivariant mapping, the first neural network is made up of steerable layers, wherein an output of a steerable layer is determined based on a Clebsch-Gordan product of an input to the steerable layer and the embedding of the position.

A first message may preferably be determined for each neighbor (N) of the node (K). The first messages may then be aggregated into a second message. This may be achieved by providing the mean of the first messages as second message. However, other common aggregation approaches used in message passing neural networks may be used here as well, e.g., a sum of first messages.

The second message may then be used as at least part of an input of a second neural network. The input of the second neural network may further comprise the feature vector of the first node. It may also comprise an aggregation of the embeddings of the positions of the neighboring nodes of first node, e.g., a mean of the embeddings of the positions of the neighboring nodes of the first node. The second neural network may then determine the new feature vector for the first node, wherein the second neural network preferably performs an equivariant mapping. Like in the first neural network, this is preferably achieved by the second neural network being made up of steerable layers. The Clebsch-Gordan products may, however, preferably use the aggregation of the embeddings of the positions of the neighbors of the first node as steerable vector when processing an input to a respective steerable layer.

The process of determining a new feature vector for the first node may preferably be performed for each node thereby determining a new feature vector for each node. It is, however, possible to exclude some nodes from updates at a user's discretion.

The result of forwarding the graph ($x$) through a graph convolutional layer ($G_1$, $G_2$, $G_n$) may hence be understood as the graph ($x$) itself with the feature vectors of the nodes enriched by additional information. The result may hence be used as input to another graph convolutional layer ($G_1$, $G_2$, $G_n$) to enrich the feature vectors even further. After a last graph convolutional layer ($G_n$), each node may be classified based on a respective feature vector, e.g., by means of a linear classifier. Alternatively or additionally, a regression result, i.e., a result of performing a regression analysis, may also be determined for each node. The classification and/or regression result for each node may then be provided in the output signal ($y$) of the neural network (60).

It is also possible to classify and/or determine a regression result characterizing the entire graph ($x$). For this, the feature vectors may be forwarded to a readout unit ($R$) of the neural network (60). The readout unit ($R$) may be configured to aggregate the feature vectors into a single feature vector, e.g., by determining the mean of the feature vectors. The single feature vector may then be forwarded to a multilayer perceptron, which is configured to determine a classification and/or a regression result for the graph ($x$) based on the single feature vector. In Figure 1, the multilayer perceptron is depicted by a plurality of fully connected layers ($F_1$, $F_2$, $F_m$).

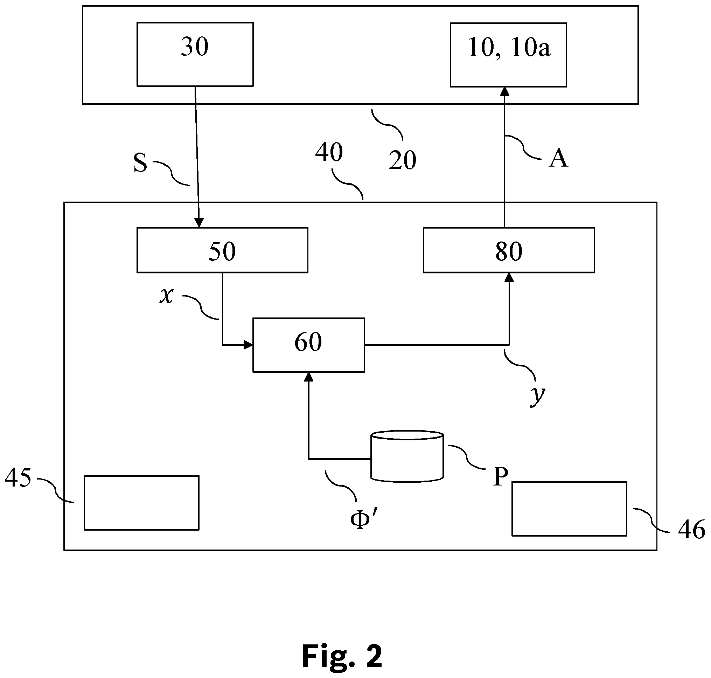

Figure 2 shows an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in a receiving unit (50). The receiving unit (50) transforms the sensor signals (S) into a graph ($x$). The graph ($x$) is then passed on to the neural network (60).

The neural network (60) is parametrized by parameters ($\Phi$), which are stored in and provided by a parameter storage (P).

The neural network (60) determines an output signal ($y$) from the graph ($x$). The output signal ($y$) comprises information that assigns one or more classes or one or more real values to the graph ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

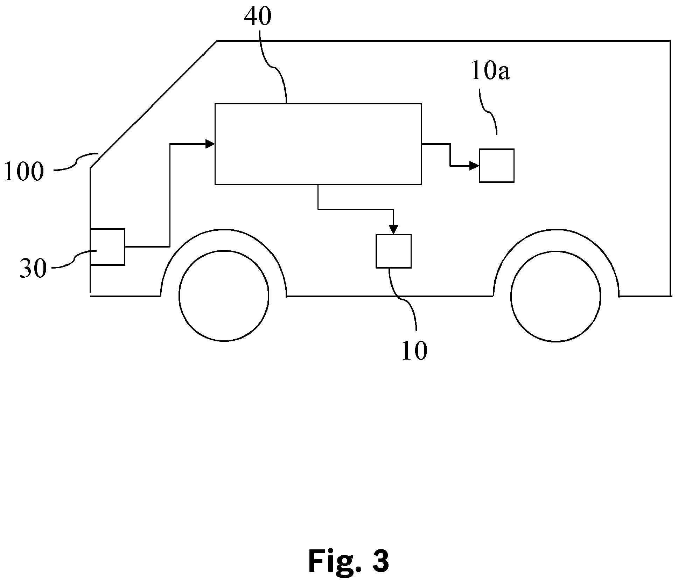

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The sensor (30) may determine the location of objects in the vicinity of the vehicle (100). The nodes of the graph ($x$) may then characterize the detected objects. The feature vectors of the nodes may, e.g., characterize a spatial extent of a respective object, it's current velocity or other meta-information that can be derived from the sensor signal (S). The neural network (60) may, for example, be configured to predict the future positions and/or velocities for each node. The conversion unit (80) may then determine a collision-free route through the environment based on the prediction of the neural network (60), e.g., for determining a collision-free route through the environment. The actuator (10) may then be controlled by the conversion unit (80) in order for the vehicle to travel on the determined route.

The actuator (10), which is preferably integrated in the vehicle (100), may be given by a brake, a propulsion system, an engine, a drivetrain, or a steering of the vehicle (100).

Alternatively or additionally, the control signal (A) may also be used to control the display (10a), e.g., for displaying the detected objects and/or their predicted future positions and/or velocities.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

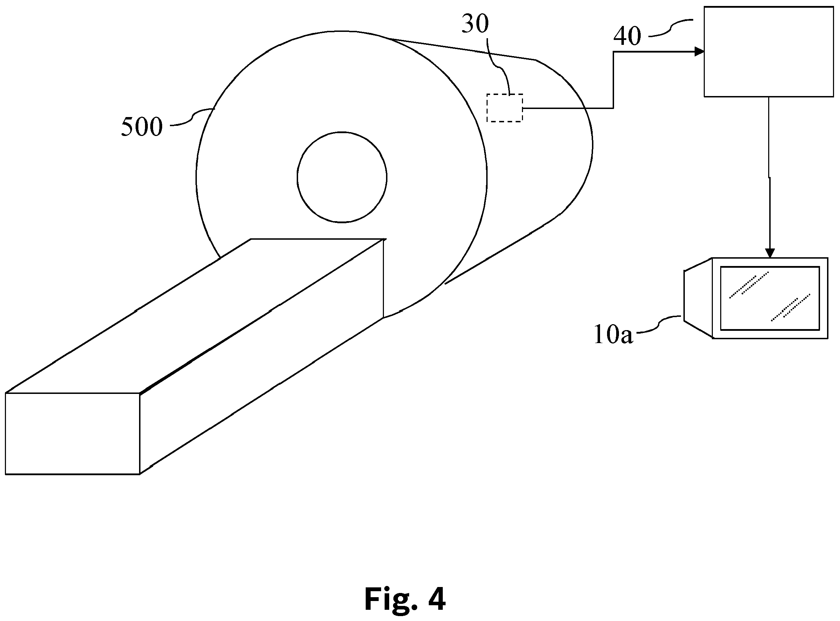

Shown in figure 4 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The neural network (60) may then determine a classification of different types of body tissue. The imaging system may, for example, determine a 3D model of at least parts of a body of a patient. This 3D model may then be used as graph ($x$) as input of the neural network (60).

The control signal (A) may then be chosen in accordance with the classification, thereby controlling a display (10a). For example, the neural network (60) may be configured to detect different types of tissue, e.g., by classifying the tissue into either malignant or benign tissue. The control signal (A) may then be determined to cause the display (10a) to display different tissues, e.g., by coloring different regions of identical tissue types in a same color.

In further embodiments (not shown) the imaging system (500) may be used for non-medical purposes, e.g., to determine material properties of a workpiece. In these embodiments, the neural network (60) may be configured to receive a 3D scan of the workpiece, e.g., in form of a 3D model or as a rigid body system. The control signal (A) may then be determined to cause the display (10a) to display the scan as well as information about the detected material properties.

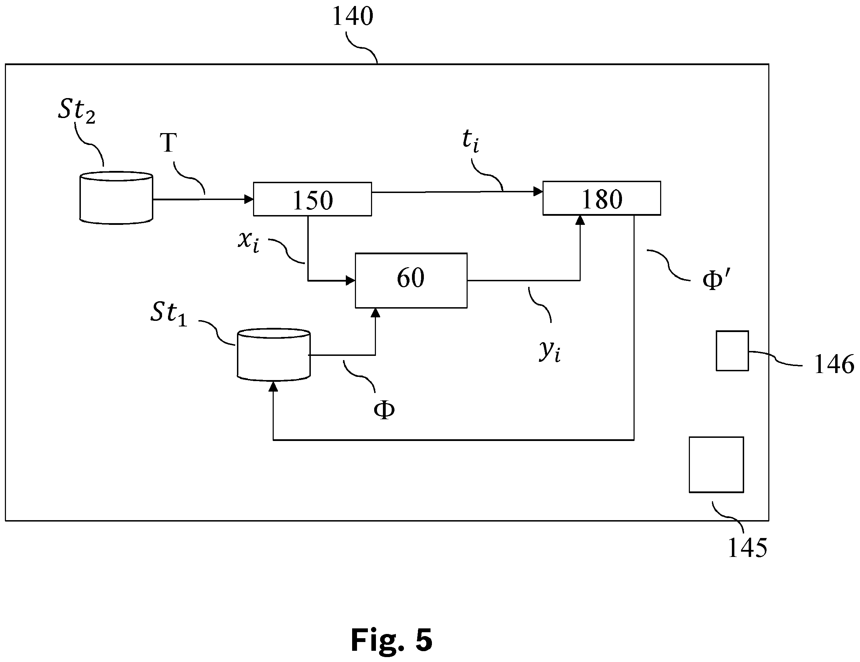

Figure 5 shows an embodiment of a training system (140) for training the neural network (60) of the control system (40) by means of a training data set (T). The training data set (T) comprises a plurality of input signals ($x_i$) which are used for training the neural network (60), wherein the training data set (T) further comprises, for each input signal ($x_i$), a desired output signal ($t_i$) which corresponds to the input signal ($x_i$) and characterizes a classification and/or a regression result of the input signal ($x_i$). The input signal ($x_i$) may in particular be understood as a graph.

For training, a training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the neural network (60). The neural network (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the neural network (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-like hood function is used as the loss function. Other loss functions are also conceivable in alternative embodiments.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks. For determining gradients necessary for the gradient descent method, an automatic differentiation method may be used.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1.  Neural network (60) configured for determining an output signal ($y$) characterizing an analysis of a graph ($x$), wherein nodes (K) and/or edges of the graph ($x$) comprise covariant information and wherein the neural network (60) comprises a graph convolutional layer ($G_1$, $G_2$, $G_n$) that receives a layer input based on the graph ($x$) and provides a layer output, wherein the analysis depends on the layer output and wherein the layer output characterizes a first feature vector of a first node (K) of the graph ($x$) and wherein determining the layer output comprises the steps of:

    • Determine at least one first message from a neighboring node (N) to the first node (K) of the graph ($x$), wherein the first message is determined by a first neural network, wherein the first neural network characterizes an equivariant mapping with respect to a covariant information of the first node (K) and a covariant information of the neighboring node (N);
    • Determining a second message by aggregating the determined first messages for the first node (K);
    • Determining the first feature vector by a second neural network, wherein for determining the first feature vector the second neural network is supplied the second message as at least part of an input of the second neural network and wherein the second neural network characterizes an equivariant mapping with respect to the covariant information of the first node and the covariant information of the neighboring node.

2.  Neural network (60) according to claim 1, wherein the first neural network and/or the second neural network comprises a steerable layer respectively, wherein the steerable layer characterizes a mapping between steerable vector spaces and wherein steering is based on the covariant information of the first node and the covariant information of the neighboring node.

3.  Neural network (60) according to claim 2, wherein the mapping **characterized by** the steerable layer is based on a Clebsch-Gordan product of an input of the steerable layer and a determined steerable vector, wherein the steerable vector characterizes covariant information of the neighboring node.

4.  Neural network (60) according to claim 3, wherein coefficients of the Clebsch-Gordan product are weighted by learnable parameters ($\Phi$) of the steerable layer.

5.  Neural network (60) according to claim 3 or 4, wherein the steerable layer is comprised in the first neural network and the steerable vector is determined according to a projection of the covariant information of the neighboring node onto a basis of spherical harmonics.

6.  Neural network (60) according to claim 3 or 4, wherein the steerable layer is comprised in the second neural network and the steerable vector is determined according to a mean of projections of covariant information of neighboring nodes onto a basis of spherical harmonics.

7.  Neural network (60) according to any one of the claims 2 to 6, wherein the steerable layer comprises an activation function, wherein the activation function characterizes a pointwise or gated non-linearity.

8.  Neural network (60) according to any one of the claims 1 to 7, wherein the graph characterizes an atomic structure, a molecular structure, a point cloud obtained from sensing an environment by means of a sensor, a position and/or a movement of traffic participants, a position and/or a movement of molecules in a substance, a particle system, a fluid, a rigid body system or a model from a finite element method.

9.  Neural network (60) according to any one of the claims 1 or 8, wherein the output signal characterizes a classification or a regression result for the graph or wherein the output signal characterizes a classification or regression result for at least one node of the graph.

10. Computer-implemented method for determining an output signal characterizing an analysis of a graph, wherein nodes of the graph comprise covariant information and the output signal is determined by a neural network (60) according to any one of the claims 1 to 9.

11. Computer-implemented method for training a neural network according to any one of the claims 1 to 9.

12. Training system (140), which is configured to carry out the training method according to claims 11.

13. Computer program that is configured to cause a computer to carry out the method according to claim 10 or 11 if the computer program is carried out by a processor (45, 145).

14. Machine-readable storage medium (46, 146) on which the computer program according to claim 13 is stored.

Fig. 1

**Fig. 2**

**Fig. 3**

**Fig. 4**

EP 4 145 350 A1

**Fig. 5**

# EP 4 145 350 A1

Europäisches
Patentamt

European
Patent Office

Office européen
des brevets

## EUROPEAN SEARCH REPORT

Application Number

EP 21 19 4450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHANNES KLICPERA ET AL: "GemNet: Universal Directional Graph Neural Networks for Molecules", ARXIV.ORG, CORNELL UNIVERSITY LIBRARY, 201 OLIN LIBRARY CORNELL UNIVERSITY ITHACA, NY 14853, 2 June 2021 (2021-06-02), XP081991132, * abstract, sections 3-4, appendix A; figures 4, 7 * | 1-14 | INV. G06N3/04 G06N3/08 |
| X | YI LIU ET AL: "Spherical Message Passing for 3D Graph Networks", ARXIV.ORG, CORNELL UNIVERSITY LIBRARY, 201 OLIN LIBRARY CORNELL UNIVERSITY ITHACA, NY 14853, 9 February 2021 (2021-02-09), XP081877911, * abstract, sections 3-4; figure 2 * | 1-14 | |
| X | FABIAN B FUCHS ET AL: "SE(3)-Transformers: 3D Roto-Translation Equivariant Attention Networks", ARXIV.ORG, CORNELL UNIVERSITY LIBRARY, 201 OLIN LIBRARY CORNELL UNIVERSITY ITHACA, NY 14853, 24 November 2020 (2020-11-24), XP081821733, * section 3; figure 2 * | 1-14 | TECHNICAL FIELDS SEARCHED (IPC) G06N |

The present search report has been drawn up for all claims

| Place of search | Date of completion of the search | Examiner |
|---|---|---|
| Munich | 18 February 2022 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- **SATORRAS et al.** *E(n) equivariant graph neural networks,* 09 May 2021, https://export.arxiv.org/abs/2102.09844v2